# EUROPEAN PATENT APPLICATION

(11) **EP 0 709 856 A1**
(43) Date of publication of application: **01.05.1996**
(21) Application number: 95307402.8
(22) Date of filing: 18.10.1995
(51) Int. Cl.: G21C 3/32

(54) **Nuclear reactor fuel assembly comprising a plate type debris catcher**

(30) Priority: 27.10.1994 US 330825
(71) Applicant: GENERAL ELECTRIC COMPANY, Schenectady, NY 12345 (US)
(72) Inventor: Johansson, Eric Bertil, Prescott, Arizona 86301 (US)
(74) Representative: Pratt, Richard Wilson

(57) **Abstract**

A nuclear reactor fuel bundle includes a hollow lower tie plate assembly (256) having a lower end with an inlet opening and an upper end with a fuel rod supporting grid (234). A peripheral sidewall extends between the lower and upper ends to define a coolant flow volume therebetween. The fuel rod supporting grid includes an array of fuel rod bosses interconnected by a plurality of webs and defining therebetween a plurality of flow openings through which coolant is permitted to pass. A debris catcher (234,234') is located at the top of the lower tie plate assembly (256), the debris catcher (234,234') including a first lower plate (280) having a first plurality of laterally spaced, parallel bars (292) extending in a first direction and a second upper plate (258), vertically spaced from the first plate (280), and having a second plurality of laterally spaced, parallel bars (260) extending in a second direction substantially perpendicular to the first direction. The upper plate (258) of the debris catcher also functions as a fuel rod supporting grid.

## Description

### TECHNICAL FIELD

The present invention relates to a lower tie plate assembly for a nuclear reactor fuel bundle, and particularly to a debris catcher incorporated within the lower tie plate assembly, the debris catcher formed by perforated tubes abutting the underside of the lower tie plate grid. The grid and the debris catcher are constructed to afford minimum pressure loss for coolant flow through the lower tie plate assembly and into the fuel bundle region downstream of the lower tie plate assembly.

### BACKGROUND

Boiling water nuclear reactors have been in operation for many years. Commencing with their initial construction and throughout their service lives, these reactors have been known to accumulate debris in their closed circulation moderator (coolant) systems. This debris can become an operating hazard if allowed to enter into the fuel bundle core region containing the heat generating fuel rods. In fact, debris is a leading cause of fuel rod failure in boiling water nuclear reactors (BWR's). In order to understand this problem, a summary of reactor construction as it relates to the accumulation of debris in the core needs will be helpful. Thereafter, the fuel bundle construction will be described with emphasis on the need to preserve substantially unchanged the regions of pressure drop within the fuel bundles. The effects caused by debris entering into the fuel rod region of the fuel bundles will then be summarized.

In boiling water nuclear reactor construction, the reactor is provided with a large, central core. Liquid water coolant/moderator flow enters the core from the bottom and exits the core as a water steam mixture from the top. The core includes many side-by-side fuel bundles, each containing a plurality of fuel rods. Water is introduced into each fuel bundle through a fuel bundle support casting from a high pressure plenum situated below the core. Water passes in a distributed flow through the individual fuel bundles and about the fuel rods where it is heated to generate steam, and then exits the upper portion of the core as a two-phase water steam mixture from which the steam is extracted for the generation of energy.

The core support castings and fuel bundles are a source of pressure loss in the circulation of water through the core. By properly controlling such pressure losses, substantially even distribution of flow across the individual fuel bundles of the reactor core is achieved. When it is remembered that there are as many as 750 individual fuel bundles in a reactor core, it can be appreciated that assurance of the uniformity of flow distribution is important. To interfere with the existing pressure drop within the fuel bundles could negatively affect the overall distribution of coolant/moderator within the fuel bundles of the reactor core.

The fuel bundles for a boiling water nuclear reactor are typically supported between lower and upper tie plate assemblies. The lower tie plate (LTP) assembly is a one- or two-piece structure including a) an upper grid and 2) a lower inlet nozzle and associated structure providing a transition region from the inlet nozzle to the grid. The inlet nozzle provides for coolant entry to an enlarged flow volume within the flow transition region of the lower tie plate assembly. At the upper end of the flow volume, there is located a tie plate grid. The tie plate grid has two purposes. First, it provides a mechanical support connection for the weight of the individual fuel rods to be transmitted through the lower tie plate assembly to the fuel support casting. Secondly, the tie plate grid provides a path for liquid water moderator to flow into the fuel bundle region for passage between the side-by-side supported fuel rods.

Above the lower tie plate grid, each fuel bundle includes a matrix of upstanding fuel rods, each containing fissionable material which, when undergoing nuclear reaction, transfers energy to the flowing water to produce the power generating steam. The matrix of upstanding fuel rods is engaged at its upper end by the upper tie plate assembly. Usually, water rods also extend (within the fuel rod matrix) between the upper and lower tie plate assemblies for improvement of the water moderator to fuel ratio, particularly in the upper region of the fuel bundle.

Fuel bundles also indude a number of fuel rod spacers at varying elevations along the length of each bundle. These spacers are required because the fuel rods are long (about 160 inches) and slender (about 0.4 to 0.5 inches in diameter), and would come into abrading contact under the dynamics of fluid flow and nuclear power generation. The spacers provide appropriate lateral restraints for each fuel rod at their respective elevations and thus prevent abrading contact between the fuel rods and maintain the fuel rods at uniform spacing relative to one another along the length of the fuel bundle for optimum performance. It will be appreciated that these spacers are sites where debris can be trapped and damage the fuel rods.

Each fuel bundle is surrounded by an elongated channel. This channel confines water flowing between the upper and lower tie plate assemblies to a single bundle in an isolated flow path. The channel also serves to separate the steam generating flow path through the fuel bundles from the surrounding core bypass region used for the penetration of the control rods. The water in the bypass region also provides neutron moderation.

In the operation of a boiling water nuclear reactor, maintenance of the originally designed flow distribution is very important. Specifically, from the core inlet to the core outlet, about 20 pounds per square inch (psi) of the pressure drop is encountered at typical flow operating conditions. About 7 to 8 psi of this pressure drop occurs through the inlet orifice and fuel support casting. This pressure drop is mainly to assure the uniform distribution of coolant/moderator flow through the many fuel bundles making up the core of the reactor, and is related to the prevention of operating instabilities within the reactor at certain power rates. At the LTP assembly of each fuel bundle, from the inlet nozzle into the flow volume and through the tie plate grid, about 1 to 1-½ psi pressure drop occurs which contributes to uniform flow distribution between the individual fuel rods of each fuel bundle. Finally, through the fuel bundle itself - from the exit of the LTP assembly to the exit at the upper tie plate assembly -- about 11 psi of pressure drop usually occurs. When new fuel bundles are introduced into a reactor core, these flow resistances must be preserved. Otherwise, the coolant/moderator flow distribution could be compromised among the various types of fuel in the reactor core.

With respect to the fuel rod supporting grid of the LTP assembly, a matrix of cylindrical bosses and webs generally form the grid. The bosses are sized to receive the fuel rod end plugs. The flow area between the bosses and webs is the primary factor in controlling pressure drop resulting from water flow through the grid.

In early grid constructions, the fuel rods had greater cross-sectional diameters and the bosses were large. In more recent grid constructions, however, the fuel rods have smaller cross-sectional diameters and the bosses are smaller. Also, in early constructions, fewer fuel rods formed a fuel bundle than in recent constructions.

Even with all of these changes in grid and bundle construction, however, it is necessary to avoid significant changes in pressure drop. For example, a core may be composed of older (8x8) bundles and newer (10x10) bundles, and the flow through each bundle preferably is uniform. One challenge with new fuel bundle constructions, and particularly LTP grid constructions, is to accommodate more fuel rods and to perform a debris catching function, yet maintain a flow rate substantially equivalent to the flow experienced in older bundle constructions.

Typically, debris within boiling water nuclear reactors can include extraneous materials left over from reactor construction, and outage maintenance and repair activities. During the numerous outages and repairs, even further debris accumulates. Because nuclear reactors constitute closed circulation systems, it will be appreciated that debris will essentially accumulate with increasing age and use of the reactor. A particularly vexing but usual place for the accumulation of debris is in the fuel bundles between the fuel rods, and particularly in the vicinity of the fuel rod spacers. Debris particles tend to lodge between the spacer structure and the fuel rods and often dynamically vibrate with the coolant/moderator flow in abrading contact to the sealed cladding of the fuel rods.

### SUMMARY OF THE INVENTION

The present invention relates to an LTP assembly incorporating a unique debris catcher which results in little if any additional flow resistance and attendant pressure drop. The LTP assembly in a first embodiment includes upper And lower parts which together form the LTP flow volume and lower inlet orifice or nozzle. The upper and lower parts may be secured together by suitable means, such as welding. Before describing the debris catcher in any detail, however, a further brief discussion of the grid construction will be helpful.

As mentioned above, the LTP grid supports the fuel rods in a manner enabling a smooth, substantially uniform expansion of coolant flow into the channeled fuel bundle. To accomplish the latter, a plurality of laterally spaced, generally cylindrical bosses defining through openings, extend between upper and lower surfaces of the LTP grid and receive lower ends of the fuel rods. Webs also extend between those surfaces and interconnect the bosses. The bosses are arranged on vertical centerlines arranged at the corners of square matrices, with the webs extending linearly between the bosses along the sides of the square matrices. Convex portions of the cylindrical bosses extend between the right angularly related webs of each matrix. Thus, the webs and the convex portions of the bosses of the upper portion of the LTP grid define coolant flow openings or flow areas between the bosses.

In accordance with this invention, a debris catcher is provided in the upper portion of the LTP assembly. The debris catcher includes two plates, the upper plate provides the fuel supporting grid described above, and contains a set of parallel bars in each of the coolant flow openings. The lower plate contains sets of parallel bars oriented at right angles to the bars in the upper plate. For example, in a first exemplary embodiment, the LTP assembly is formed in two parts, a lower part inclusive of the lower nozzle and portion of the flow volume, and an upper part incorporating the lower debris catcher plate and the remaining portion of the flow volume. The lower debris catcher plate is formed integrally in the upper part of the LTP assembly, and includes a plurality of parallel bars or rods, arranged in spaced pairs, extending in a first direction between opposite sides of the LTP upper part. A plurality of single transverse bars or rods extend in a second direction (perpendicular to the first direction) between the two remaining opposite sides of the LTP upper part and serve to rigidify the plate as a whole. Between the multiple pair sets of bars or rods, there are provided sets of abbreviated bars also extending in the first direction.

In this first exemplary embodiment, the upper debris catcher plate component is combined with the fuel rod supporting grid and this separately formed component is adapted for insertion into the upper part of the LTP assembly immediately adjacent and downstream (i.e., above, the lower debris catcher plate. The combined fuel rod supporting grid and upper debris catcher plate includes a conventional array of fuel rod supporting bosses and interconnecting webs to provide flow openings therebetween. Just below the fuel rod supporting grid (in the lower debris catcher plate), there are a plurality of parallel rods or bars extending in the second direction (perpendicular to the multiple pairs of rods extending in the first direction, in the lower debris catcher plate). With the combined fuel rod supporting grid and upper debris catcher plate in place in the upper part of the LTP assembly, the mutually perpendicular sets of parallel bars combine to form relatively small flow openings within each of the larger flow openings between the fuel rod supporting bosses. In addition, there is a vertical gap between the upper and lower debris catcher plates to allow for horizontal flow between the plates.

In a second exemplary embodiment of the invention, the lower debris catcher plate is formed as a separate plate which may be welded initially to the underside of the upper debris catcher plate which, in turn, is combined with the fuel rod supporting grid. This sub-assembly may then be welded in place within a recess provided in an upper end of the LTP assembly.

In a third exemplary embodiment of the invention, both the lower debris catcher plate (again formed as a separate item) and the combined fuel rod supporting grid/upper debris catcher plate, are formed with similar fuel rod supporting bosses and interconnecting webs defining flow openings therebetween. In each of the upper and lower debris catcher plates, however, these flow openings are formed with a plurality of parallel bars or rods, wherein the bars in the upper debris catcher plate extend in a direction perpendicular to the bars or rods in the lower debris catcher plate. When the upper and lower debris catcher plates are superposed and located within a recess in the upper end of the LTP assembly, a criss-cross arrangement is provided, defining a plurality of relatively small, generally square flow openings within the larger flow openings defined by the fuel rod supporting bosses and interconnecting webs.

Thus, in accordance with a first aspect of the invention, there is provided a nuclear reactor fuel bundle, a hollow lower tie plate assembly comprising a lower end having an inlet opening and an upper end having a fuel rod supporting grid, and a peripheral sidewall extending between the lower and upper ends to define a coolant flow volume therebetween, the fuel rod supporting grid including an array of fuel rod bosses interconnected by a plurality of webs and defining therebetween a plurality of flow openings through which coolant is permitted to pass in a predetermined flow direction; and a debris catcher located at the upper end of the lower tie plate assembly, the debris catcher including a lower plate having a first plurality of laterally spaced, parallel bars extending in a first direction and an upper plate, vertically spaced from the first plate, and having a second plurality of laterally spaced, parallel bars extending in a second direction substantially perpendicular to the first direction.

In accordance with another aspect of the invention, there is a provided a nuclear reactor fuel bundle, a hollow lower tie plate assembly comprising a lower end having an inlet opening and an upper end defining a fuel rod supporting grid, and a peripheral sidewall extending between the lower and upper ends to define a coolant flow volume therebetween, the fuel rod supporting grid including an array of fuel rod bosses interconnected by a plurality of webs and defining therebetween a plurality of flow openings through which coolant is permitted to pass; a debris catcher and located within the flow volume and including a first lower plate formed with an array of fuel rod supporting bosses interconnected by a plurality of webs to define therebetween a first plurality of flow openings, each flow opening of the first plurality of flow openings having a plurality of laterally spaced parallel bars extending across each flow opening in a first direction, and including a second upper plate formed with an array of fuel rod supporting bosses interconnected by a plurality of webs to define therebetween a second plurality of flow openings in vertical alignment with the first plurality of flow openings, each flow opening of the second plurality of flow openings having a second plurality of laterally spaced, parallel bars extending across each flow opening in a second direction substantially perpendicular to the first direction.

Additional objects and advantages of the present invention will become apparent from the detailed description which follows.

### BRIEF DESCRIPTION OF THE DRAWINGS

FIGURE 1 is a partial side elevation, partly in section, of a typical fuel bundle for a boiling water nuclear reactor and including a lower tie plate assembly;
FIGURE 2 is a plan view of the lower tie plate assembly shown in Figure 1;
FIGURE 3 is a simplified plan view illustrating the criss-cross arrangement resulting from the superposition of debris catcher plates in accordance with this invention;
FIGURE 4 is a section taken along the line 4-4 of Figure 3;
FIGURE 5 is a section taken along the line 5-5 of Figure 3;
FIGURE 6 is a side section of an upper portion of a lower tie plate assembly, incorporating a lower debris catcher plate in accordance with this invention, taken along the line 6-6 of Figure 7;
FIGURE 7 is a plan view of the lower tie plate illustrated in Figure 7;
FIGURE 8 is a plan view of a combined fuel rod supporting grid, upper debris catcher plate in accordance with the invention;
FIGURE 9 is a section, taken along the line 9-9 in Figure 8;
FIGURE 10 is a section taken through the line 10-10 of Figure 8;
FIGURE 11 is an enlarged detail taken from Figure 8;
FIGURE 12 is a section taken along the line 12-12 in Figure 11;
FIGURE 13 is an enlarged detail from Figure 7;
FIGURE 14 is an enlarged detail in plan illustrating the interaction between the parallel debris catcher bars in the upper and lower debris catcher plates when superposed one over the other;
FIGURE 15 is an exploded section of a lower tie plate assembly and combined lower tie plate fuel rod supporting grid/debris catcher in accordance with a second exemplary embodiment of the invention;
FIGURE 16 is a plan view of the lower debris catcher plate in accordance with a third exemplary embodiment of the invention;
FIGURE 17 is a section taken along the line 17-17 of Figure 16;
FIGURE 18 is a section taken along the line 18-18 in Figure 16;
FIGURE 19 is a plan view of an upper debris catcher plate in accordance with a third exemplary embodiment of the invention;
FIGURE 20 is a section taken along the line 20-20 in Figure 19;
FIGURE 21 is a section taken along the line 21-21 in Figure 19;
FIGURE 22 is an exploded front elevation, partly in section, illustrating the combined upper and lower debris catcher grid sections in accordance with the third exemplary embodiment of this invention, in close association to a lower tie plate adapted to receive the debris catcher;
FIGURE 23 is an enlarged detail taken from Figure 19;
FIGURE 24 is an enlarged detail taken from Figure 18;
FIGURE 25 is an enlarged detail of the upper and lower debris catcher plates superposed in an assembled relationship.

### BEST MODE FOR CARRYING OUT THE INVENTION

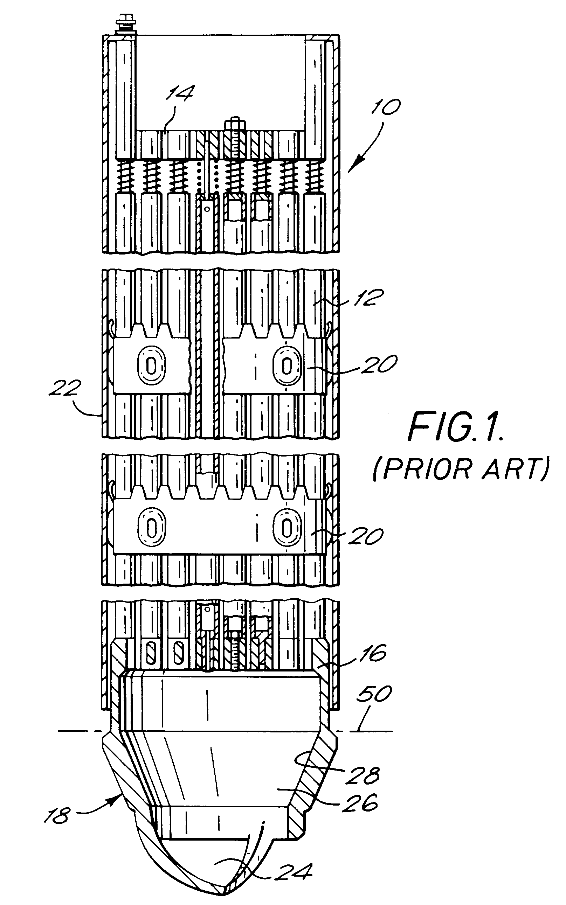

Referring now to Figure 1, a representative example of a fuel assembly is shown generally at 10. The assembly includes a plurality of fuel rods 12 forming a bundle. The rods 12 are connected at their upper ends to an upper tie plate 14 and are supported at their lower ends by an LTP grid, generally designated 16, which forms part of an LTP assembly, generally designated 18. Spacers 20 are arranged at a plurality of vertically spaced locations to maintain lateral spacing of the fuel rods 12 relative to one another. The fuel bundle is disposed within a fuel bundle channel 22 whereby coolant water introduced through the bottom nozzle or inlet opening 24 of the LTP assembly 18 flows upwardly through a flow volume 26 defined by a peripheral wall 28 of the LTP assembly 18, through the lower tie plate grid 16, and then along and about the fuel rods 12. As indicated previously, it is important that debris in the coolant be prevented from flowing through the LTP assembly and into the area between the channeled fuel rods 12.

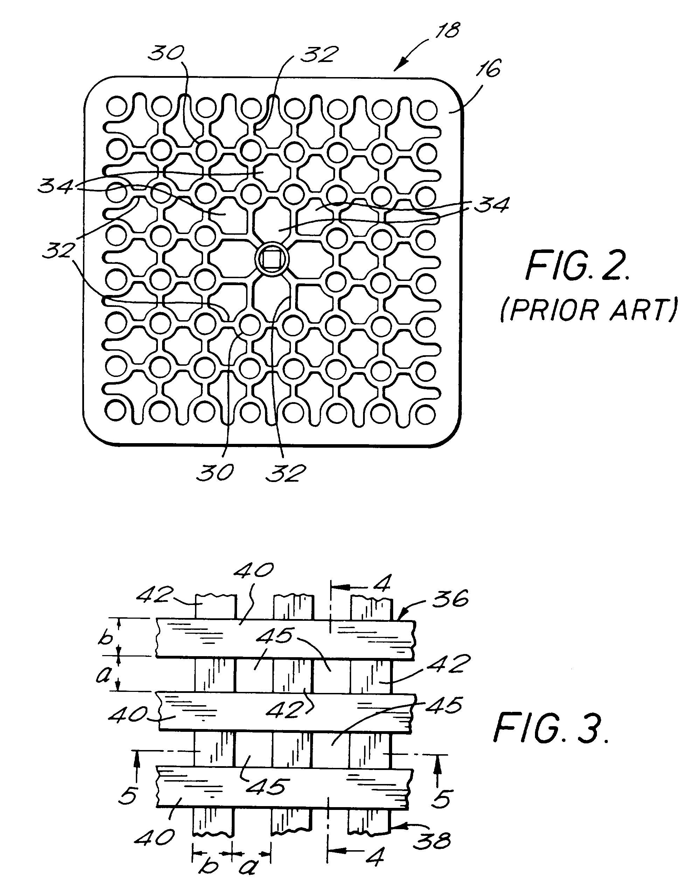

Referring now to Figure 2, there is illustrated a conventional lower tie plate grid 16 forming a part of the LTP assembly 18. The grid 16 may be formed integrally with or separately from the remainder of the LTP assembly (including the peripheral wall 28 and the bottom nozzle 24). If formed separately, the grid is secured to the remaining portion of the LTP by, for example, welding. The LTP grid 16 supports the fuel rods 12 above the grid and to this end, the grid 16 includes a plurality of generally cylindrical, vertically extending bosses 30 having centerlines arranged at corners of substantially square matrices of such bosses. Interconnecting (and forming the sides of) the square matrices are webs 32 adjoining the adjacent cylindrical bosses 30 along radial lines of the bosses 30 and extending between the upper and lower surfaces of the grid 16. Consequently, it will be seen that the webs 32 have portions formed along the sides of each square matrix and, together with convex outer portions of the cylindrical bosses 30, define side walls of openings or flow areas 34 which permit coolant to flow through the grid 16 and into the channeled fuel bundle assembly.

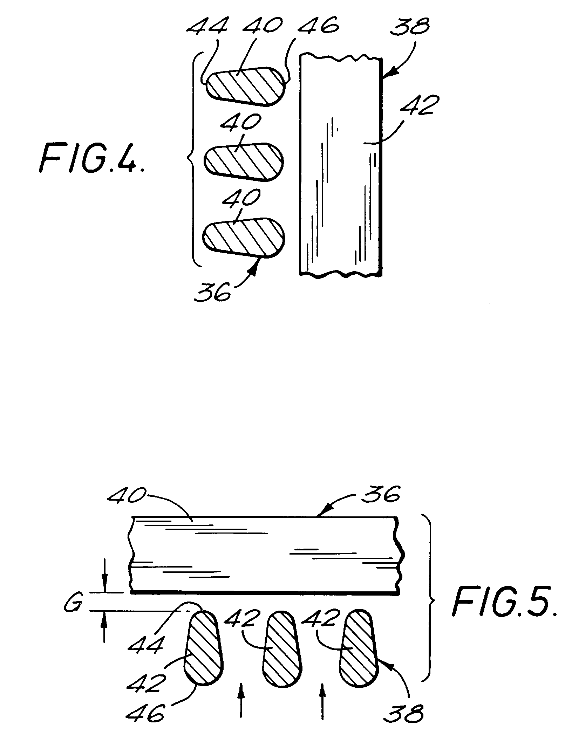

With reference generally to Figures 3-14 and specifically to Figures 3-5, the debris catching function in accordance with this invention is performed by a pair of superposed upper and lower plates 36, 38 incorporating two sets, respectively, of substantially parallel bars arranged substantially perpendicular to each other. More specifically, the concept generally is to use one set of bars 40 in an upper plate 36 extending in a first direction, and a second set of bars 42 in the lower plate 38 extending in a second direction oriented substantially 90° relative to the first direction, thereby forming relatively small flow openings 45.

It will be appreciated that in the event the upper and lower debris catcher plates are located in close vertical proximity to one another, the maximum cross section of debris which can pass through the debris catcher is given by the separation between the bars, dimension "a" (Figure 3). At each grid, the area fraction available for flow is a/(a+b) where "b" is the thickness of the bars. If the two grids were collapsed into a single grid, the flow area fraction would be much smaller, i.e., a/(a+b). If "a" and "b" are equal, the flow area fraction for the individual plates is 1/2 and for the collapsed single plate 1/4. Thus, the flow velocities and associated pressure drop are kept low while restricting the size of debris which can pass through the debris catcher plates.

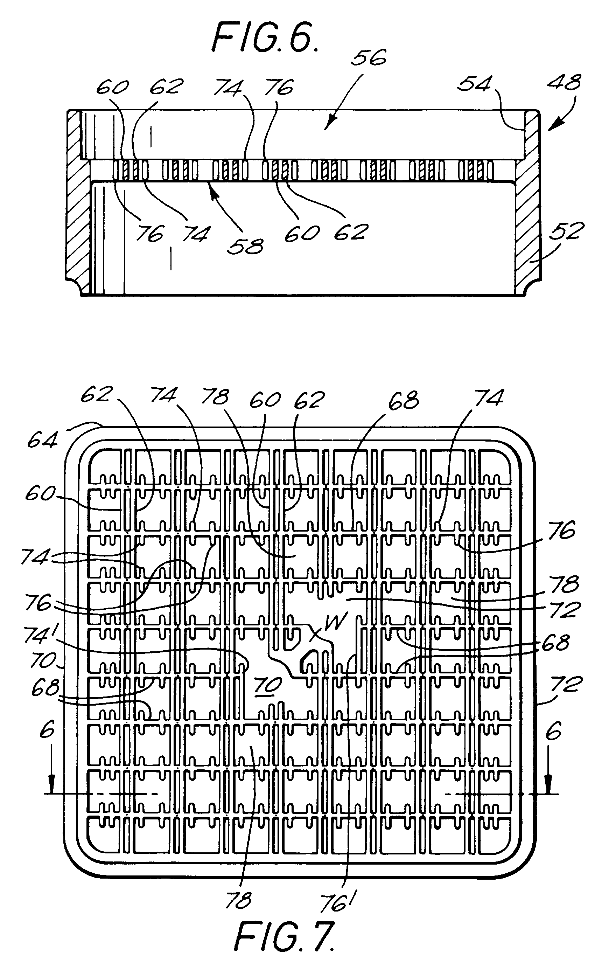

There is some pressure loss associated with the changes in flow direction as the flow passes from the first to the second grid. This loss is minimized, however, by shaping the grid bars 40 and 42. More specifically, the leading edges of each are rounded and the trailing edges are tapered to provide a diffuser action. In other words, the bars 40 and 42 have similar cross sectional "teardrop" shapes, with a smaller curved end 44 at the top of each bar and a larger curved end 46 at the lower end of each bar, best seen in Figures 4 and 5.

Turning now to Figures 6 through 14, the double plate concept discussed above is applied to a particular fuel bundle LTP. With specific reference to Figure 6, an upper part 48 of a three piece LTP assembly is shown (which may be welded to a lower part incorporating the flow inlet nozzle and a lower portion of the flow volume at-a separation line in the vicinity of line 50 shown in Figure 1). This upper part includes a peripheral side wall 52 (generally square in plan as best appreciated from Figure 7) having a reduced thickness portion 54 at the upper end thereof which provides a recess 56 for receiving a combined fuel rod supporting grid and upper debris catcher plate as described below.

Immediately below and adjacent the recess 56 (in an upstream direction relative to the normal upward flow of coolant), there is provided a lower debris catcher plate 58 of the debris catcher, preferably integrally cast with the upper part 48 of the LTP assembly. The lower plate 58 includes several pair (eight pair in the exemplary embodiment) of full length, parallel bars 60, 62 extending between opposite sides 64, 66 of the peripheral side wall 52. A plurality of single, spaced bars 68 extend perpendicularly or transversely to the bars 60, 62 between remaining opposite sides 70, 72 of the side wall 52. As best seen in Figure 7, two pairs of the bars 60, 62 and two of the transverse bars 68 are interrupted in a central area of the grid 58 to provide openings 70, 72 (separated by a web W) for accommodating two water rods (not shown) of otherwise conventional construction which extend upwardly through the center of the fuel bundle.

Between the respective pairs of bars 60, 62, each transverse bar 68 is formed with a pair of abbreviated bars 74, 76 extending in opposite directions on either side of each of the bars 68, parallel to the bars 60, 62. These bars 74, 76 are essentially uniform throughout the grid with the exception of the central water rod opening areas where abbreviated bars 74', 76' extend fully between (and slightly beyond) a pair of adjacent transverse bars 68. As will be appreciated from Figure 7, the predominant elements in the lower debris catcher grid are the bars 60, 62 and parallel, abbreviated bars 74, 76 all of which interact with the transverse single bars 68 (which provide rigidity to the grid) to form an array of openings 78 therebetween. These openings 78 are provided for the fuel rod end plugs which project downwardly into these regions.

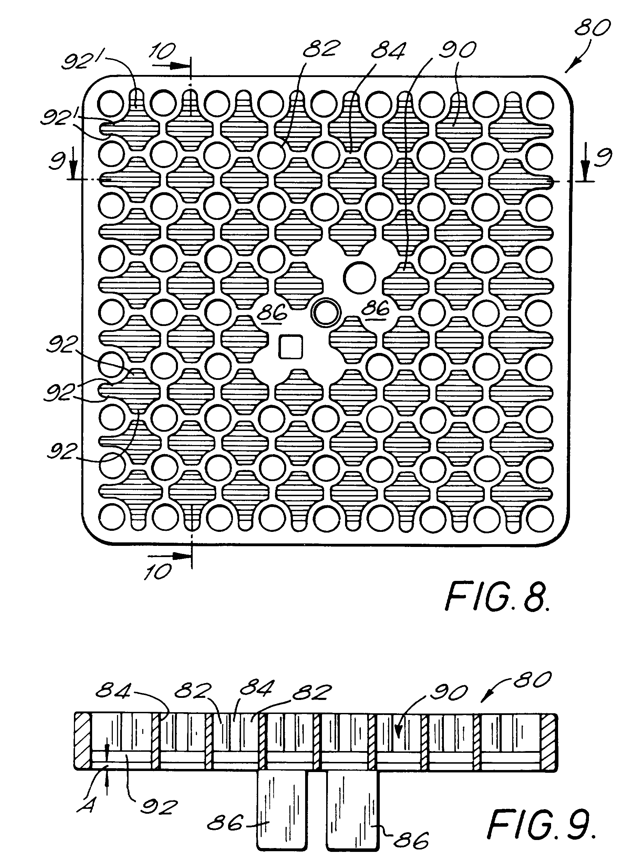

Turning now specifically to Figures 8-10, a combined fuel rod grid and upper debris catcher plate 80 is illustrated. The plate 80 is formed with a fuel rod supporting grid including generally cylindrical bosses 82 interconnected by webs 84, as well as enlarged water rod bosses 86, 86. In accordance with this invention, the majority of flow openings 90 formed between the bosses 82 and webs 84 are each formed with sets (four) of parallel bars 92 in the lower portion thereof, extending in directions perpendicular to the bars 60, 62 and abbreviated bars 74, 76 in the lower debris catcher grid plate 48. In the enlarged corner flow openings 90', five parallel bars 92' extend thereacross.

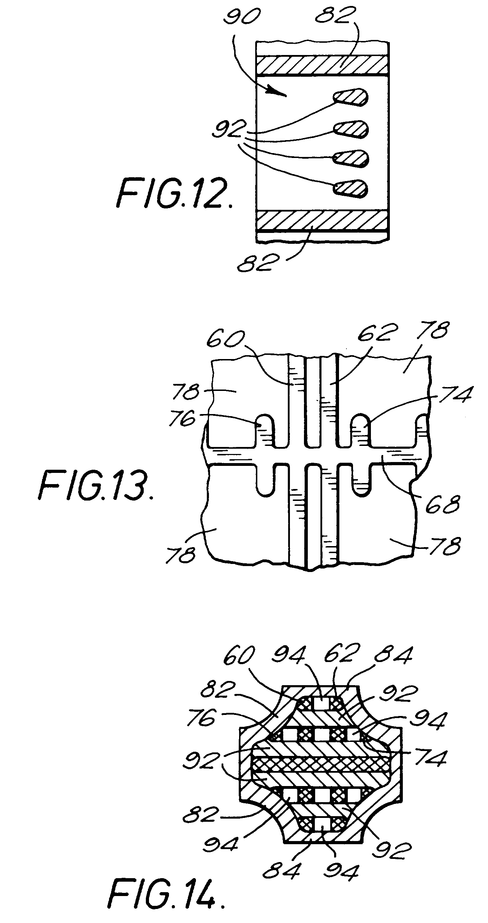

When the combined fuel rod grid and upper debris catcher plate 80 is located (and secured, by welding, e.g.) within the recess 56, a criss cross pattern of debris catcher grid bars results, as best seen in Figure 14, with resulting relatively small flow openings indicated by numerals 94. It will be appreciated that there is also a vertical gap G (Figure 5) between the debris catcher bars of the upper and lower debris catcher plates, as determined by the extent to which webs 84 extend below the bars 92 as viewed in Figure 9 (dimension A), and as also shown between bars 40 and 42 in Figure 5.

With this arrangement, the flow velocities and associated pressure drop are kept low while, at the same time, the size of debris which can pass through the openings 94 remains small.

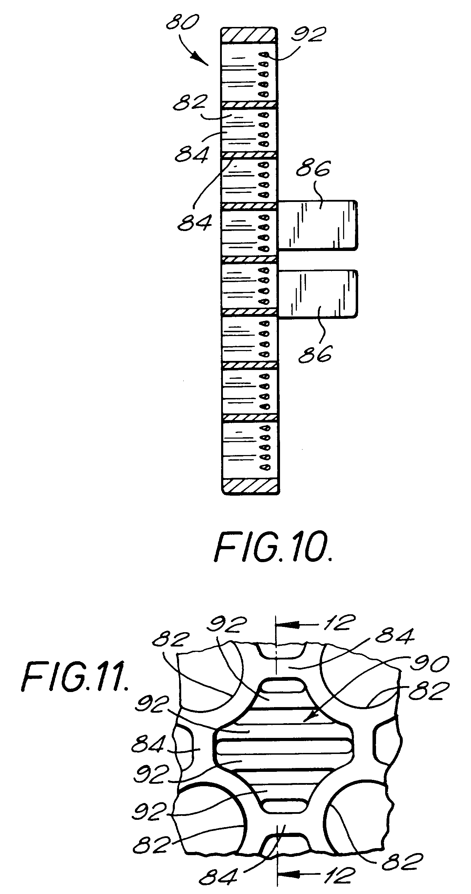

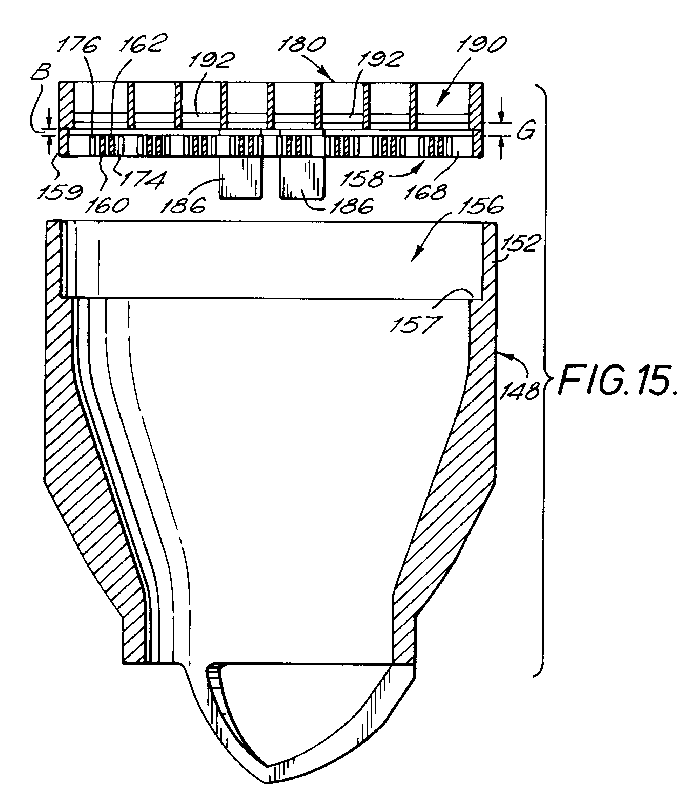

Referring now to Figure 15, a second exemplary embodiment of the invention is shown wherein the lower debris catcher plate 158 is formed as a separate plate, and is adapted for insertion in a recessed area 156 in the LTP 148 which, unlike the construction in Figure 6, is not split into upper and lower parts, but, rather, is formed as a single body having an enlarged area or recess 156 formed in an upper end thereof, as defined by an interior shoulder 157. Here, the plate 158 may be welded initially to the underside of a combined fuel rod supporting grid and upper debris catcher plate 180, with water rod bosses 186 projecting downwardly through the central water rod opening areas in the plate 158. Plate 158 is otherwise similar in construction to the plate 58 shown in Figure 6 in that bars 160, 162, 174 and 176 extend in one direction and single transverse bars 168 extend transversely thereof to rigidify the plate. At the same time, the combined fuel rod grid and upper plate 180 is similar to that shown at 80 in Figures 9 and 10, with bars 192 extending across the flow openings 190 in a direction transverse to the bars 160, 162, 174 and 176.

The gap G between the perpendicular bars 192 and 160, 162, 174, 176 of the upper and lower debris catcher plates, respectively, is increased in this embodiment by reason of the peripheral wall 159 of the lower debris catcher plate 158 extending above the bars 160, 162, 174 and 176 by the dimension B. Accordingly, the gap G is equal to A + B. The assembly as shown in Figure 15 may be welded in place within the recessed area 156, seated on the shoulder 157 formed in the peripheral wall 152 of the LTP. The grid patterns of bars in both the upper and lower debris catcher grid plates 158 and 180 and the flow interaction therebetween is otherwise similar to that of the first described embodiment.

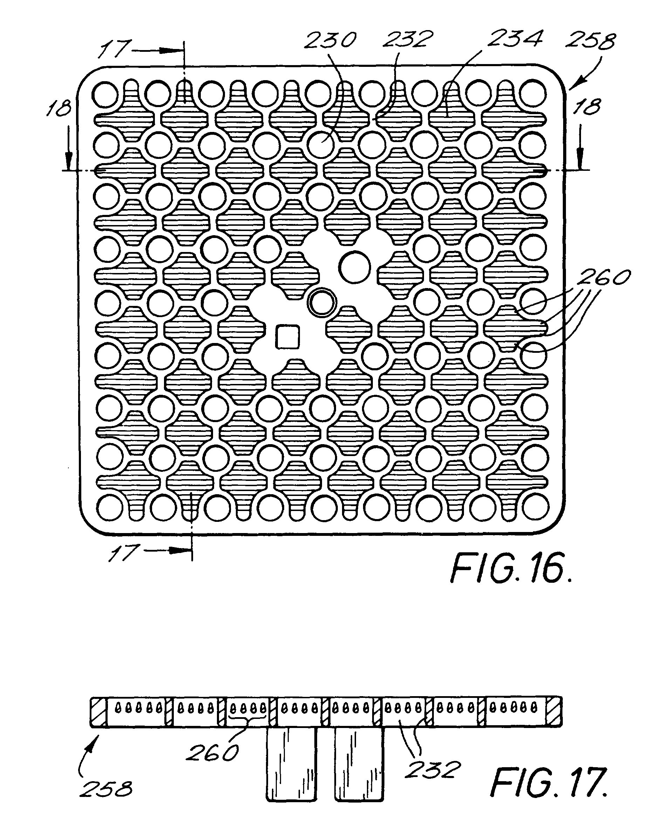

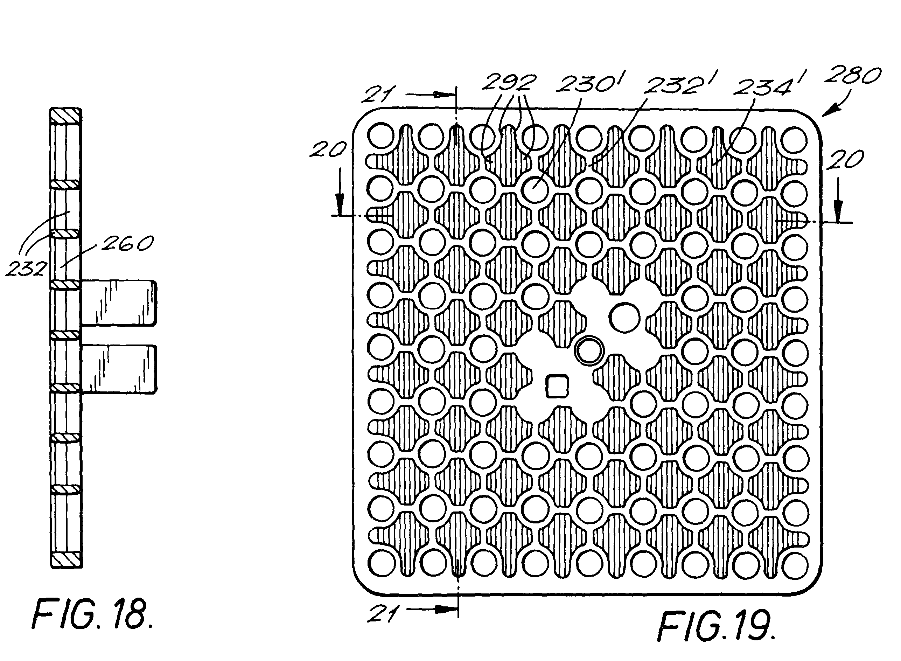

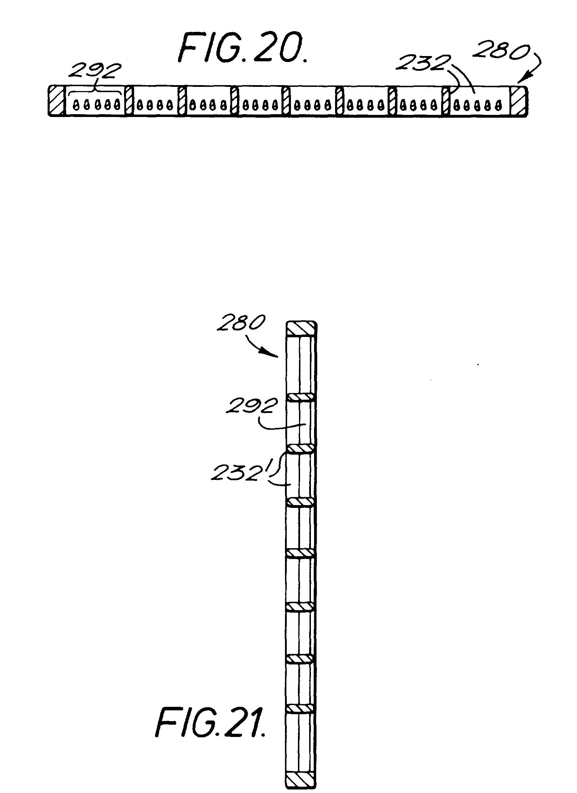

Turning now to Figures 16-25, a third exemplary embodiment of the invention is illustrated. As in the second embodiment, the lower debris catcher plate 258 (Figures 17-19) is formed as a separate plate, again designed for welded attachment to an upper combined fuel rod supporting grid and upper debris catcher plate 280 (Figures 20-22). In this embodiment, however, both upper and lower debris catcher plates 258 and 280 are formed with similarly arranged (and thus vertically aligned) fuel rod supporting bosses 230, 230', respectively, interconnected by webs 232, 232' to form aligned flow openings 234, 234'.

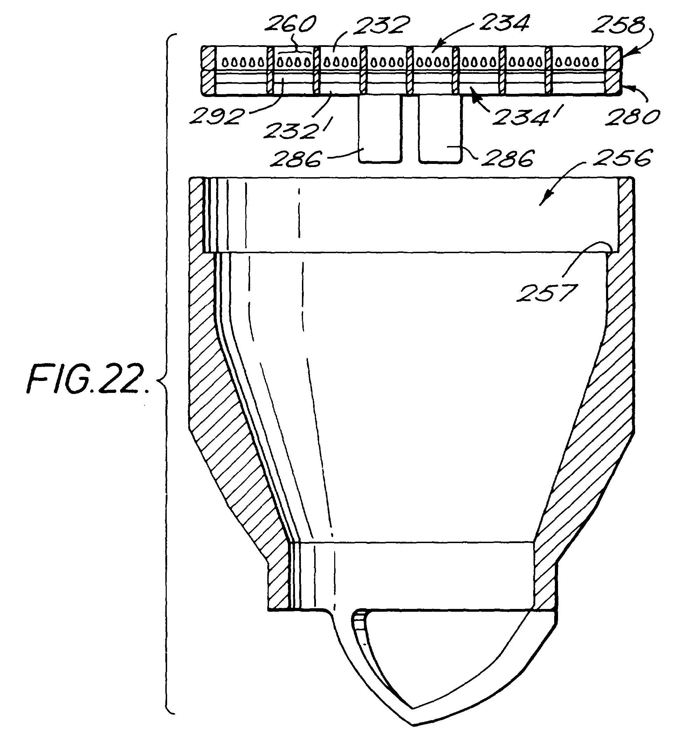

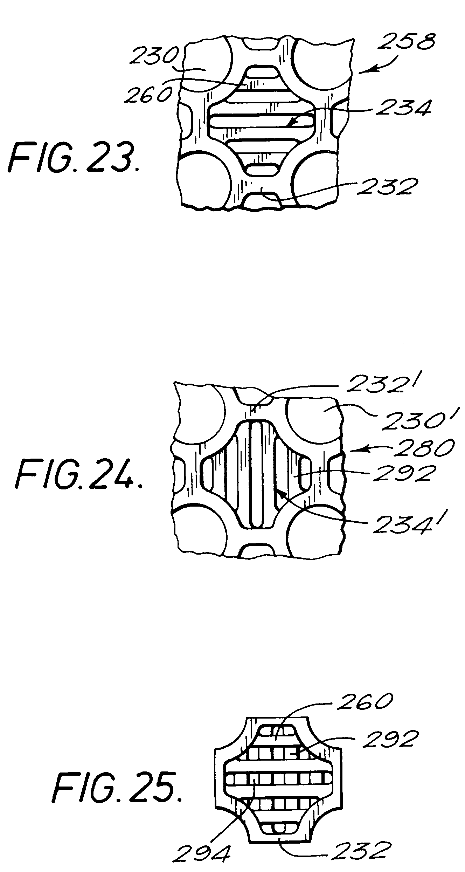

In this third exemplary embodiment, the flow openings 234 and 234' in each of the upper and lower plates, respectively, are formed with a plurality of bars or rods 260, 292, respectively, extending across the openings, in a mutually perpendicular arrangement, best seen in Figures 23 and 24. When the plates 258 and 280 are assembled together as shown in Figure 22, they are inserted into the cavity 256 and seated on shoulder 257 where the debris catcher assembly is welded in place. The overlying plates 258, 280 establish a plurality of relatively small flow openings 294, best seen in Figure 25.

It will be appreciated that in each case described above, vertically spaced sets of mutually perpendicular bars are located immediately upstream of the fuel rod supporting bosses to effectively screen out debris down to a specific size, thereby precluding such debris from passing through the flow openings and into the fuel rod area of the bundles.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. In a nuclear reactor fuel bundle, a hollow lower tie plate assembly comprising a lower end having an inlet opening and an upper end having a fuel rod supporting grid, and a peripheral sidewall extending between said lower and upper ends to define a coolant flow volume therebetween, said fuel rod supporting grid including an array of fuel rod bosses interconnected by a plurality of webs and defining therebetween a plurality of flow openings through which coolant is permitted to pass in a predetermined flow direction; and
a debris catcher at the upper end of the lower tie plate assembly, said debris catcher including a lower plate having a first plurality of laterally spaced, parallel bars extending in a first direction and an upper plate, vertically spaced from said first plate, and having a second plurality of laterally spaced, parallel bars extending in a second direction substantially perpendicular to said first direction.

2. The fuel bundle of claim 1 wherein said lower tie plate assembly comprises separately formed upper and lower parts, said lower plate of said debris catcher being formed integrally with said upper part of said lower tie plate, and said upper part of said lower tie plate including a support surface for receiving said upper plate.

3. The fuel bundle of claim 2 wherein said fuel rod supporting grid and said upper plate of said debris catcher are formed as an integral unit secured to said support surface.

4. The fuel bundle of claim 2 wherein said upper and lower parts are welded together about said peripheral sidewall.

5. The fuel bundle of claim 1 wherein said lower tie plate assembly comprises a single main body having a peripheral sidewall extending between a lower end and an upper end, the upper end having an enlarged recessed area defined by an interior shoulder, and wherein said fuel rod supporting grid and said upper plate of said debris catcher are formed as an integral unit, and further wherein said lower plate of said debris catcher is secured to an underside of said upper plate, said debris catcher including said fuel rod supporting grid secured within said enlarged recessed area.

6. In a nuclear reactor fuel bundle, a hollow lower tie plate assembly comprising a lower end having an inlet opening and an upper end defining a fuel rod supporting grid, and a peripheral sidewall extending between said lower and upper ends to define a coolant flow volume therebetween, said fuel rod supporting grid including an array of fuel rod bosses interconnected by a plurality of webs and defining therebetween a plurality of flow openings through which coolant is permitted to pass; and
a debris catcher located within said flow volume and including a first lower plate formed with an array of fuel rod supporting bosses interconnected by a plurality of webs to define therebetween a first plurality of flow openings, each flow opening of said first plurality of flow openings having a plurality of laterally spaced parallel bars extending across each said flow opening in a first direction, and including a second upper plate formed with an array of fuel rod supporting bosses interconnected by a plurality of webs to define therebetween a second plurality of flow openings in vertical alignment with said first plurality of flow openings, each flow opening of said second plurality of flow openings having a second plurality of laterally spaced, parallel bars extending across each said flow opening in a second direction substantially perpendicular to said first direction.

7. The fuel bundle of claim 6 wherein said first and second pluralities of laterally spaced, parallel bars are separated by a vertical gap.

8. The fuel bundle of claim 6 wherein said first lower plate and said second upper plate are secured together and are secured within an enlarged recessed are formed at an upper end of said peripheral sidewall.

9. The fuel bundle of claim 1 or 6 wherein each of said first and second plurality of bars is formed with rounded upper and lower surfaces.

10. The fuel bundle of claim 9 wherein each of said first and second plurality of bars is tapered in cross section.
